# EUROPÄISCHE PATENTANMELDUNG

(11) **EP 1 816 400 A2**
(43) Veröffentlichungstag der Anmeldung: **08.08.2007**
(21) Anmeldenummer: 07001760.3
(22) Anmeldetag: 26.01.2007
(51) Int. Cl.: F23R 3/50, F23R 3/10

(54) **Gasturbinenbrennkammer mit Kraftstoffeinspritzung über den gesamten Brennkammerring**

(30) Priorität: 02.02.2006 DE 102006004840
(71) Anmelder: Rolls-Royce Deutschland Ltd & Co KG, 15827 Blankenfelde-Mahlow (DE)
(72) Erfinder: Becker, Jochen, 15834 Rangsdorf (DE)
(74) Vertreter: Weber, Joachim

(57) **Zusammenfassung**

Die Erfindung betrifft eine Gasturbinenbrennkammer mit einer durch eine äußere (1) und eine innere (2) Brennkammerwandung begrenzten Ringbrennkammer (3) sowie mit mehreren Kraftstoffeinspritzdüsen (4), dadurch gekennzeichnet, dass im stirnseitigen Bereich der Ringbrennkammer (3) über den gesamten Brennkammerring (5) Luftleitprofile (6) konzentrisch um die Brennkammerachse (12) angeordnet sind und dass die Kraftstoffeinspritzdüsen (4) im Wesentlichen gleichmäßig über den Brennkammerring (5) verteilt angeordnet sind.

## Beschreibung

Die Erfindung bezieht sich auf eine Gasturbinenbrennkammer gemäß dem Oberbegriff des Hauptanspruches.

Im Einzelnen bezieht sich die Erfindung auf eine Gasturbinenbrennkammer einer durch eine äußere und eine innere Brennkammerwandung begrenzten Ringbrennkammer sowie mit mehreren Kraftstoffeinspritzdüsen.

Aus dem Stand der Technik ist es bekannt, bei Ringbrennkammern den Kraftstoff über mehrere am Umfang verteilte Kraftstoffeinspritzdüsen in den ringförmigen Brennkammerraum einzuspritzen oder einzusprühen. Hierbei wird ein kegelförmig ausgebildeter Kraftstoffvorhang mit einem konzentrisch um die Einspritzdüsen wirbelnden Luftstrom vermischt. Der somit erzeugte Wirbel aus Kraftstoff und Luft ist jeweils konzentrisch um die Mittelachse der Kraftstoffeinspritzdüse angeordnet.

Bei der bekannten Ausgestaltung des Brennkammerrings erweist es sich als nachteilig, dass große Bereiche zwischen den Kraftstoffeinspritzdüsen ohne eine direkte Versorgung von Luft und Kraftstoff ausgebildet sind. Somit wird nicht die gesamte Fläche des Brennkammerrings für eine von Beginn an homogene Durchmischung des Kraftstoff-Luft-Gemisches genutzt. Der nur "lokal" konzentrisch um die Kraftstoffeinspritzdüsen eingesprühte Kraftstoff führt nur zu einer relativ groben Ausnutzung des Ringbrennkammer-Raums.

Die lokal eingesprühten, relativ großen Massen an Kraftstoff benötigen eine gewisse Zeit und damit auch einen gewissen Raum, um zu einem relativ groben zündfähigen und einigermaßen gleichmäßig verteilten Gemisch zu führen. Hieraus ergibt sich, dass die Länge der Ringbrennkammer, bezogen auf die Strömungsrichtung, entsprechend groß dimensioniert sein muss.

Weiterhin ist durch die beschriebenen Problemkreise der Ausbrenngrad des Kraftstoff-Luft-Gemisches begrenzt und Stickoxide lassen sich nur mit erheblichem Aufwand weiter reduzieren. Weiterhin ergeben sich durch die relativ ungleichmäßige Gemischaufbereitung Druck-, Strömungs- und Temperaturschwankungen über den Umfang der Ringbrennkammer.

Auch das Temperaturprofil am Brennkammer-Austritt ist, bedingt durch die ungleichmäßige Einspritzung von Kraftstoff, in Umfangsrichtung relativ inhomogen, wodurch sich thermische Probleme im Bereich der Turbine und Schwingungen durch unterschiedliche Dichten und Strömungsgeschwindigkeiten ergeben können.

Der Erfindung liegt die Aufgabe zugrunde, eine Gasturbinenbrennkammer der eingangs genannten Art zu schaffen, welche eine homogenere Kraftstoff-Luft-Vermischung und gleichmäßigere Verbrennungsverhältnisse ermöglichen.

Erfindungsgemäß wird die Aufgabe durch die Merkmalskombination des Hauptanspruchs gelöst. Die Unteransprüche zeigen weitere vorteilhafte Ausgestaltungen der Erfindung.

Der Kern der Erfindung liegt darin, den zur Verfügung stehenden Querschnitt des Brennkammerrings vollständig auszunutzen, indem der Kraftstoff (Kraftstoffvorhang) funktionell über den gesamten Umfang der Ringbrennkammer abgewickelt bzw. verteilt wird. Dies erfolgt durch die erfindungsgemäßen Luftleitprofile, die zusammen mit anderen, nachfolgend beschriebenen Ausgestaltungsvarianten, als lokale Wirbelerzeuger dienen.

Besonders günstig ist es, wenn die Luftleitprofile in zumindest zwei konzentrischen Reihen angeordnet sind, welche die resultierenden Luftströmungen jeweils in Umfangsrichtung zueinander gegenläufig ausrichten. Es ergeben sich somit starke Verwirbelungen durch die einzelnen Luftströme, die durch die Reihen der Luftleitprofile geleitet werden. Hieraus ergeben sich Luftscherungen und tangential zueinander angeordnete Teil-Luftströmungen, die zu einer besonders guten Verwirbelung und Verteilung des eingesprühten Kraftstoffs führen (sollen).

Die Austrittsrichtungen der Kraftstoffeinspritzdüsen können entweder in einem Winkel zur lokalen Luftströmungsrichtung oder aber auch parallel hierzu ausgerichtet sein. Es ist auch möglich, die Austrittsrichtungen der Kraftstoffeinspritzdüsen in einem Winkel zur zentrischen Achse der Gasturbine anzuordnen bzw. diese, in einer abgewandelten Variante, parallel zur zentrischen Achse auszurichten.

Die Luftleitprofile sind erfindungsgemäß bevorzugt zueinander so angeordnet, dass sich viele lokale Turbulenzen ergeben, wobei jedoch der den Brennkammerring durchströmende Gesamtluftstrom keinen (resultierenden) Restdrall aufweist. Die relativ kleinen, lokalen Turbulenzen werden somit im Bereich der Kraftstoffeinspritzung hervorgerufen, während der restliche, nachfolgende Bereich der Ringbrennkammer eine im Wesentlichen axiale Luftströmung aufweist, die zu einer gleichmäßigen Verbrennung des Kraftstoff-Luft-Gemisches genutzt werden kann. Somit wird auch die Einströmung in die Turbine bzw. durch der Brennkammer nachgeordnete Leitschaufeln homogener.

Die Luftleitprofile können in einer besonders günstigen Ausgestaltung der Erfindung miteinander eine Gitterstruktur bilden. Hierdurch können besonders effektive lokale Turbulenzen oder Wirbel erzeugt werden, um den eingesprühten Kraftstoffvorhang entsprechend fein zu verteilen bzw. abzuwickeln.

Zur Verbesserung des Kraftstoffeinspritzverhaltens ist es möglich, die Kraftstoffeinspritzdüsen in die Luftleitprofile zu integrieren.

Im Folgenden wird die Erfindung anhand von Ausführungsbeispielen in Verbindung mit der Zeichnung beschrieben. Dabei zeigt:
- Fig. 1: eine schematische Teil-Schnittansicht einer Ringbrennkammer nach dem Stand der Technik,
- Fig. 2: eine schematische stirnseitige Ansicht der Ausnutzung des Brennkammerraums gemäß dem Stand der Technik,
- Fig. 3: eine vereinfachte Seiten-Schnittansicht eines beispielhaften Aufbaus einer erfindungsgemäßen Brennkammer mit Kraftstoffeinspritzgitter,
- Fig. 4: eine vereinfachte stirnseitige Teilansicht des Brennkammerrings mit einer Gitterstruktur der Luftleitprofile in abwechselnd gegenläufiger Anordnung zur Drallerzeugung in Umfangsrichtung gemäß Pfeil IX von Fig. 3,
- Fig. 5: eine Teil-Schnittansicht durch einen Brennkammerring gemäß einem Ausführungsbeispiel der Erfindung, analog der Darstellung in der Fig. 3 gemäß Pfeil X von Fig. 4,
- Fig. 6: eine abgewinkelte Schnittansicht längs der Linie XI-XI von Fig. 5,
- Fig. 7: eine Detailansicht gemäß Detail XII von Fig. 5,
- Fig. 8: eine weitere Ausgestaltungsvariante, analog den Ansichten der Fig. 4,
- Fig. 9: eine vereinfachte, stirnseitige Darstellung der sich bei dem Ausführungsbeispiel der Fig. 5, 6 und 8 ergebenden Strömungsverhältnisse,
- Fig. 10: eine weitere Ausgestaltungsvariante der Kraftstoffeinspritzung quer zur Strömungsrichtung incl. Isolierung der Kraftstoffleitungen gegen hohe Gastemperaturen in Verbindung mit einem Luftleitelement,
- Fig. 11 und 12: Teilschnittansichten des in Fig. 10 dargestellten Kraftstoffverteilungssystems,
- Fig. 13: eine stirnseitige schematische Teilansicht des in den Fig. 10, 11 und 12 gezeigten Kraftstoffsystems,
- Fig. 14: eine vergrößerte Darstellung eines weiteren Ausführungsbeispiels der erfindungsgemäßen Ringbrennkammer,
- Fig. 15: eine stirnseitige Teil-Ansicht, gemäß Pfeil III in Fig. 14,
- Fig. 16: eine stirnseitige Ansicht, analog Fig. 2, einer erfindungsgemäßen Ausgestaltung der Anordnung von Kraftstoffeinspritzdüsen.

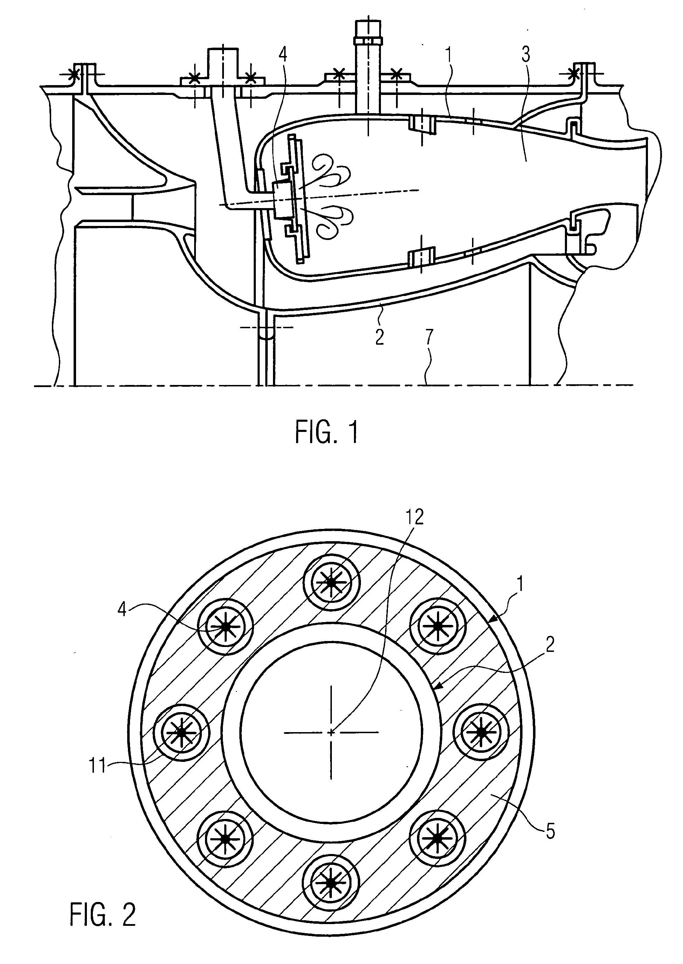

Die Fig. 1 zeigt in schematischer Darstellung eine Ringbrennkammer 3 einer Gasturbine. Die Ringbrennkammer 3 umfasst eine äußere Brennkammerwandung 1 sowie eine innere Brennkammerwandung 2, welche konzentrisch zur Achse 7 der Gasturbine angeordnet sind. Insofern entspricht die Ausgestaltung dem Stand der Technik, so dass auf weitere Erläuterungen, insbesondere hinsichtlich der Luftzufuhr und der Brennstoffzufuhr, verzichtet werden kann.

Die Fig. 2 zeigt eine stirnseitige Ansicht einer Ausgestaltung der Anordnung der Kraftstoffeinspritzdüsen 4 nach dem Stand der Technik. Dabei ist zu erkennen, dass die Kraftstoffeinspritzdüsen 4 um den Umfang verteilt sind, nämlich konzentrisch zur Brennkammerachse. Konzentrisch um jede Kraftstoffeinspritzdüse 4 sind ein oder mehrere Lufteintrittsringe 11 vorgesehen. Es bilden sich somit einzelne, singuläre Anordnungen von Kraftstoffeinspritzdüsen 4 mit zugehörigen Lufteintrittsringen 11.

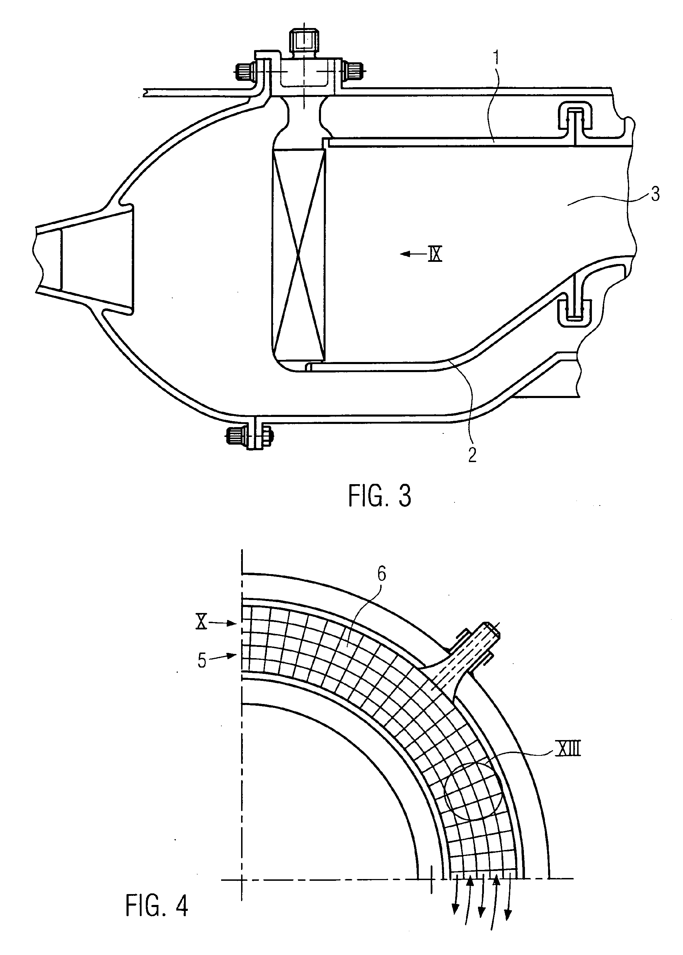

Die Fig. 3 zeigt in schematischer Seitenansicht (Schnitt) ein bevorzugtes erfindungsgemäßes Ausgestaltungsbeispiel einer Brennkammer. Der Pfeil IX gibt die Blickrichtung der Fig. 4 wieder.

Der dargestellte Aufbau folgt hier dem sog. Mager-Verbrennungskonzept, bei dem fast der komplette Luftstrom durch den Brennkammerkopf (hier: Gitter) in den Brennkammerraum zugeführt wird und nur ein geringer Reststrom zu Kühlungszwecken vorbeigeleitet wird. Eine Aufteilung in Primär- und Sekundärluft würde der erfinderischen Idee jedoch keinen Abbruch tun.

Die Brennkammerwände 1 und 2 können zu Kühlzwecken mit zahlreichen kleinen und abgewinkelten Bohrungen versehen werden, welche dem Strömungsbild an der Innenseite der Brennkammerwände folgen (Fig. 3).

Eine erfindungsgemäße Ausgestaltung ist insbesondere in den Fig. 4 bis 8 dargestellt. Hierbei erfolgt die Zuführung der (Primär-)Luft über mehr als zwei tangential gegengerichtete ringförmige Strömungskanäle, die in ihrer Gesamtheit eine Art profiliertes Gitter bilden. Die (Primär-)Luft wird durch eine Erweiterung oder Verengung der Strömungsquerschnitte derart aufbereitet, dass eine stabile Verbrennung und Lage der Flammfront gewährleistet werden kann. Zusätzlich werden mehrfach tangential gegengerichtete und axial gleichgerichtete Strömungsfelder erzeugt. Die sich bildenden kegelförmigen Wirbel prägen kleine Rezirkulationsgebiete aus und sorgen außerdem für eine verbesserte Flammstabilität. Der Kraftstoff wird hierbei über kleine Zuführungskanäle im Gitter, welche in kleine Düsen an den Profilspitzen enden, in den Brennkammerraum eingesprüht. Das sich über den gesamten Brennkammerring gleichmäßig erstreckende profilierte Gitter nimmt zudem die Kraftstoffkanalisierung bis zu den Austrittsdüsen auf.

Erfindungsgemäß ist darauf hinzuweisen, dass die Summe der auf die Luftströmungen übertragenen tangentialen Impulse beider ringförmigen Querschnitts-Strömungs-Felder gleich Null ist, so dass nach erfolgter Durchmischung, Verbrennung und Beimischung der Sekundärluft beim Eintritt in die Turbine wieder eine rein axiale Strömung vorliegt.

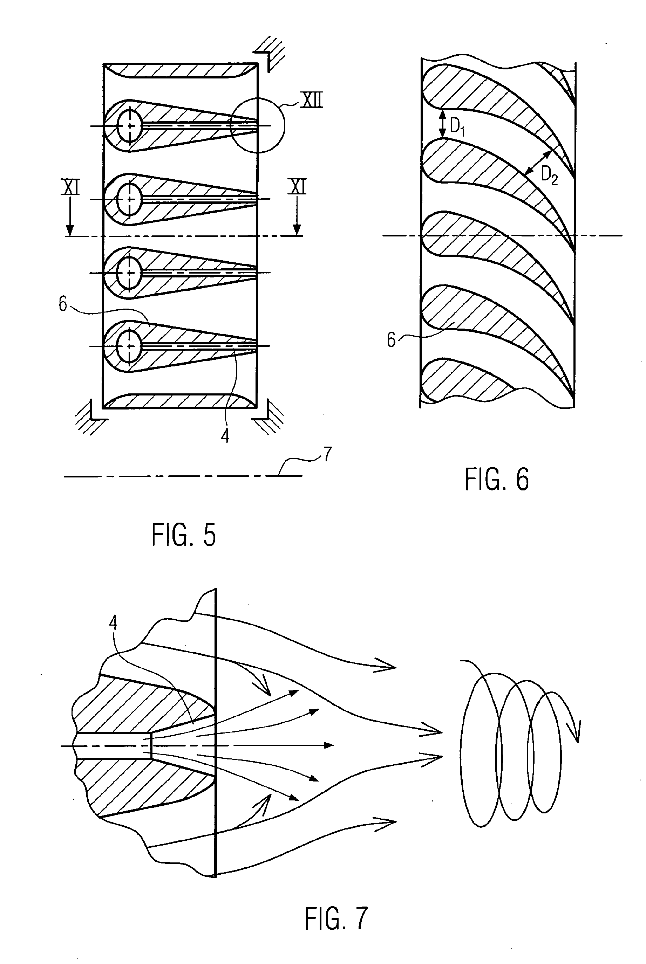

Die Fig. 5 und 6 verdeutlichen in zwei Schnitten den Aufbau der Gitterstruktur, welche hier zudem zur Kraftstoffverteilung bis zu den Austrittsöffnungen genutzt wird. In Fig. 5 ist eine axiale Einsprühung vorgesehen, die sich ergebenden Strömungsverhältnisse (Luftströmung bzw. Kraftstoffströmung) sind in vergrößerter Darstellung in Fig. 7 gezeigt. Die Fig. 6 zeigt eine Schnittansicht längs der Linie XI-XI von Fig. 5. Dabei ist ersichtlich, dass die einzelnen Luftleitprofile 6 an ihrer Einströmseite einen geringeren Abstand D₁ aufweisen können als an der Abströmseite (D₂). Hiermit ergibt sich beispielsweise eine verzögernde Durchströmung mit Luft.

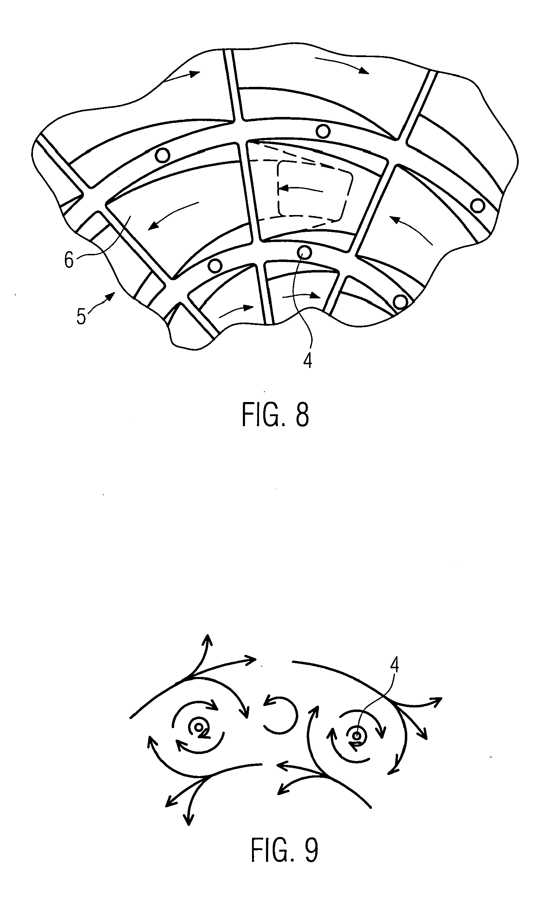

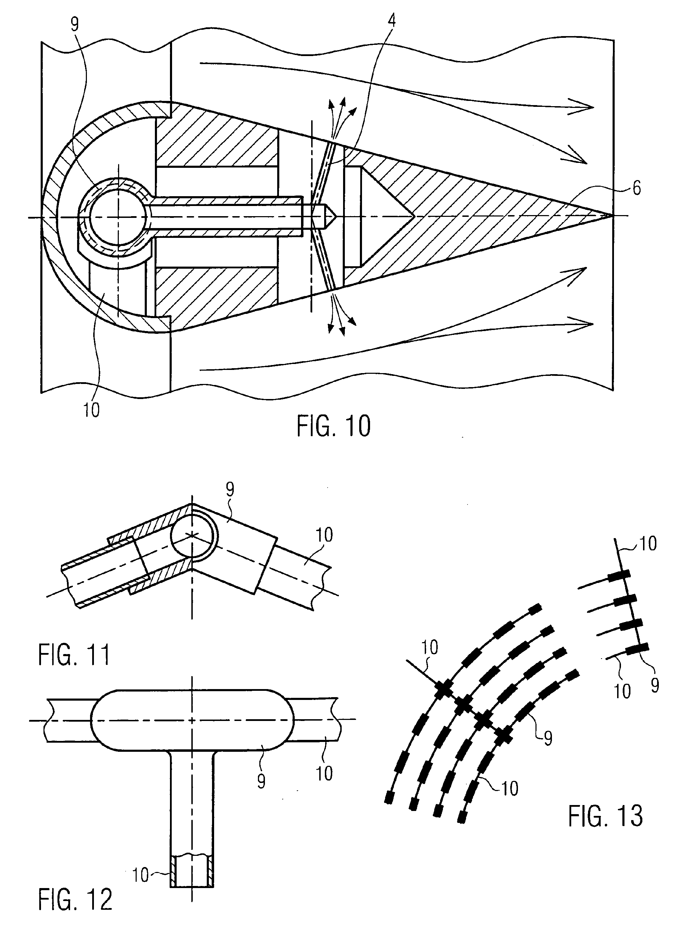

Die Darstellung der Fig. 8 zeigt eine vergrößerte Detaildarstellung gemäß Fig. 4. Hierbei ist ersichtlich, dass mehrere radiale Strömungskreise durch das Gitter gebildet werden, welche zu gegenläufigen Luftströmungen führen. Die sich ergebende Luft-Verwirbelung ist zur Verdeutlichung in Fig. 9 dargestellt. Die Fig. 10 verdeutlicht eine derartige Quereinsprühung von Kraftstoff im Gitter.

Um die Komplexität der Kraftstoffkanalisierung zu begrenzen und die Ausbaumöglichkeit zu verbessern, ist es günstig, das kreisringförmige Gitter in einzelne Segmente zu unterteilen. Jedes dieser Segmente kann durch Spalte im Gehäuse bzw. in der Brennkammer von außen radial montiert werden. Die radial angebrachten Haltestege der Gittersegmente können gleichzeitig die Kraftstoffzuführung von außen beinhalten. Derartig stabil ausgeführte Gittersegmente mit Haltestegen können dann gleichzeitig die Fixierung bzw. Stabilisierung der äußeren und inneren Brennkammerwand gemäß Fig. 3 übernehmen.

Um die Struktur des äußeren Gehäuses mit den relativ großen Luftdurchtrittsschlitzen mechanisch nicht zu sehr zu schwächen, ist auch eine konstruktive Lösung denkbar, bei der die Kraftstoffzuführung von innen nach außen erfolgt, beispielsweise durch steckbare oder montierbare Module gemäß Fig. 4.

Die dazugehörige Anordnung des Kraftstoffleitungssystems ist beispielsweise in den Fig. 11 bis 13 schematisch dargestellt. Dabei ist verdeutlicht, dass einzelne Rohr-Verbindungsstücke 9 mit Rohren 10 verbunden werden können, beispielsweise durch Hartlötung im Vakuum. Der sich zwischen den einzelnen, ringförmig angeordneten Kraftstoffleitungen ergebende Hohlraum kann zur aktiven Kühlung von außen genutzt werden. Die Anzahl, Größe und Anordnung der einzelnen Einspritzdüsen kann dabei vielfältig variiert und kombiniert werden. Die Fig. 11 bis 13 zeigen die Kraftstoffeinspritzdüsen nicht im Detail, sondern verdeutlichen lediglich den segmentartigen Aufbau des Kraftstoffzuführungssystems.

Je kleiner und zahlreicher die Strömungsfelder ausgeführt werden können, desto homogener und schneller erfolgt die Aufbereitung des Kraftstoff-Luft-Gemisches. Aus der kürzeren Aufbereitungszeit folgt, dass die Gesamtlänge der Brennkammer verkürzt werden kann.

Eine noch schnellere und homogenere Durchmischung des Kraftstoffs mit der Primärluft ist möglich, wenn der Kraftstoff nicht am Profilende des Luftleitprofils parallel eingesprüht wird, sondern schon im profilierten Gitter quer zur Strömung bzw. schräg gegen die Strömung oder mit der Strömung eingesprüht wird.

Bei der in den Fig. 4 und 8 gezeigten Ausgestaltung der Erfindung wird unter Verwendung eines durch die Luftleitprofile 6 gebildeten Austrittsgitters ein radialer Versatz jedes Schaufelreihensektors vorgesehen, der die Scherwirkung der tangential gegenläufigen Austrittsströmungen verstärkt. Die Verstärkung erfolgt dadurch, dass keine störenden Grenzschichtüberlagerungen stattfinden. An den Rändern der einzelnen Strömungen prägen sich Wirbelkegel aus. Im Zentrum der kegelförmigen Wirbel wird der Kraftstoff diskret und durch Druckzerstäuber in Strömungsrichtung ausgebracht, so dass er schnell zerstäubt und mit der Strömung homogen verteilt wird. Hierdurch verkürzt sich die Ausbrandzeit. Die kleinen kegelförmigen Wirbel stellen gleichzeitig kleine Flammenhalter dar, die eine verbesserte Flammstabilität bewirken.

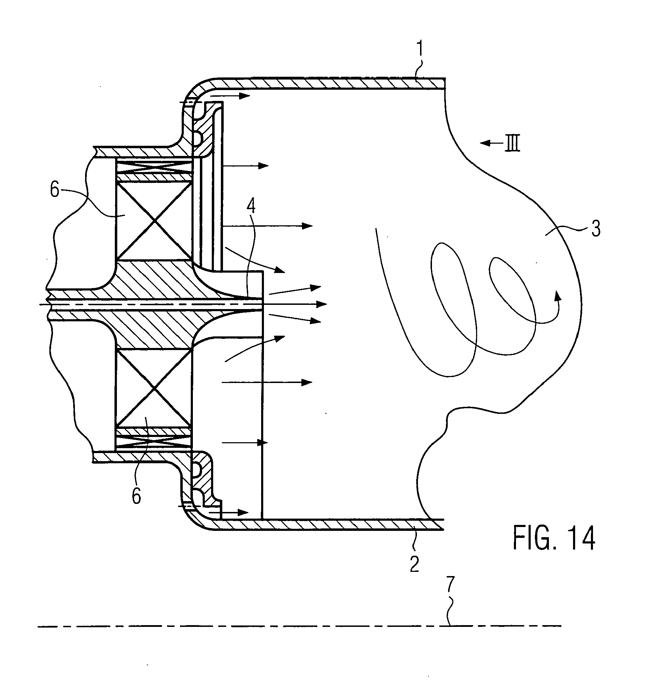

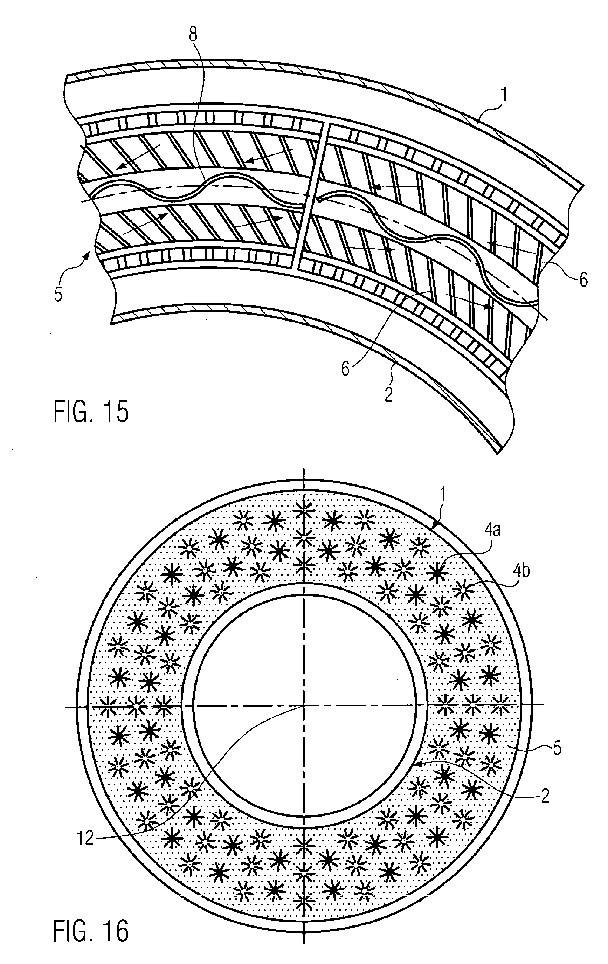

Die Fig. 14 zeigt ein weiteres Ausführungsbeispiel der Erfindung. Bei diesem ist ersichtlich, dass, wie sich auch aus der Darstellung der Fig. 15 ergibt, um den Umfang eines durch die äußere Brennkammerwandung 1 und die innere Brennkammerwandung 2 gebildeten Brennkammerrings 5 in konzentrischen Kreisen Luftleitprofile 6 angeordnet sind. Diese führen zu lokalen Luftströmungen, die durch die Pfeile dargestellt sind, wobei sich die tangentialen Komponenten insbesondere aus der Darstellung der Fig. 15 ergeben. Im Berührungsbereich der tangentialen Luftströmungen der äußeren und inneren Luftleitprofile ergibt sich eine Zone starker lokaler Turbulenzen analog Fig. 9. In diesen kann beispielsweise ein in Fig. 15 wellenförmig dargestellter Kraftstoffeinsprühschlitz 8 ausgebildet sein.

Der Kraftstoff wird hierbei in die Grenzschicht der beiden tangential gegengerichteten Primärströmungen eingespritzt. Der Kraftstoff tritt entweder aus einem ringförmig angeordneten lamellenartigen oder geraden Schlitz (siehe Schlitz 8 in Fig. 15) oder aus zahlreich am Umfang verteilten punktuellen Kraftstoffdüsen 4 aus. Auch hierbei beginnen die in Kontakt kommenden, axial gleichgerichteten und tangential gegengerichteten Luftströmungen (siehe Fig. 15) durch Scherkräfte zahlreiche kleine Wirbel auszubilden.

Die Fig. 16 zeigt eine erfindungsgemäße Ausgestaltung, nämlich eine Prinzipdarstellung eines Brennkammer-Querschnitts in analoger Ansicht zu Fig. 2. Dabei ist ersichtlich, dass eine Vielzahl von Kraftstoffeinspritzdüsen 4 vorgesehen ist, welche konzentrisch zur Brennkammerachse angeordnet und gleichmäßig verteilt sind. Die mit 4a bezeichneten Kraftstoffeinspritzdüsen können beispielsweise für den Leerlauf sowie für Taxi-Bewegungen eines Luftfahrzeuges eingesetzt werden, während die mit 4b bezeichneten Kraftstoffeinspritzdüsen bei voller Leistung der Gasturbine zugeschaltet werden. Hierdurch wird die gesamte Fläche des Brennkammerrings 5 gleichmäßig genutzt.

Die Zuführung der (Primär-)Luft in den Brennkammerraum erfolgt über mindestens zwei tangential gegengerichtete ringförmige Strömungskanäle, die in ihrer Gesamtheit eine Art profiliertes Gitter bilden (Fig. 4 bis 5). Der Kraftstoff wird hierbei über kleine Zuführungskanäle im Gitter, welche in kleine Düsen an den Profilspitzen enden, in den Brennkammerraum eingesprüht (Fig. 6). Das profilierte Gitter hat somit erfindungsgemäß die Funktion:
- die Kraftstoffkanalisierung bis zu den Austrittsdüsen aufzunehmen,
- die (Primär-)Luft durch eine Erweiterung oder Verengung der Strömungsquerschnitte derart aufzubereiten, dass eine stabile Verbrennung und Lage der Flammfront gewährleistet werden kann, und
- mehrfach tangential gegengerichtete und axial gleichgerichtete Strömungsfelder zu erzeugen.

Je kleiner und damit zahlreicher die Strömungsfelder ausgeführt werden können, desto homogener und schneller (damit kürzer) ist die Aufbereitung des Kraftstoff-Luft-Gemisches. Hierdurch kann die Ringbrennkammer prinzipiell auch kürzer gebaut werden.

Die in Kontakt kommenden axial gleichgerichteten und tangential gegengerichteten Luftströmungen beginnen durch Scherkräfte zahlreiche kleine Wirbel auszubilden (Fig. 7 bis 9). Diese sorgen somit für eine homogene und schnelle Durchmischung mit dem eingespritzten Kraftstoff sorgen, was unmittelbar zu einem schnelleren Ausbrand führt. Die kegelförmigen Wirbel bilden dann kleine Rezirkulationsgebiete aus und sorgen somit für eine verbesserte Flammstabilität. Bei der strömungstechnischen Auslegung ist erfindungsgemäß darauf zu achten, dass die Summe der auf die Strömungen übertragenen tangentialen Impulse aller ringförmigen Strömungsfelder gleich null ist, so dass nach erfolgter Durchmischung und Verbrennung beim Eintritt in die Turbine wieder eine rein axiale Strömung vorliegt (Fig. 4).

Um die Komplexität der Kraftstoffkanalisierung zu begrenzen und die Ausbaumöglichkeit im Feld zu ermöglichen, empfiehlt es sich, das ringförmige Gitter in einzelne Segmente aufzuteilen (siehe auch Fig. 10 bis 11). Jedes Segment kann dann durch Spalte im Gehäuse von außen radial montiert werden.

Die radial angebrachten Haltestege der Gittersegmente beinhalten gleichzeitig die Kraftstoffzuführung von außen (Fig. 10 und 11). Die stabil ausgeführten Gittersegmente mit Haltestegen können dann gleichzeitig die Fixierung der äußeren und inneren Brennkammerwand übernehmen (front mounted system).

Weiterführen der Ansätze:
- Eine schnellere und homogenere Durchmischung des Kraftstoffs mit der (Primär-)Luft ist möglich, wenn der Kraftstoff nicht am Profilende parallel eingesprüht wird, sondern schon im profilierten Gitter quer zur Strömung (Fig. 9) bzw. schräg gegen oder mit der Strömung eingesprüht wird. Das profilierte Gitter ist hier herstellungsbedingt zweiteilig ausgeführt. Die Verbindung ist stoffschlüssig durch Hartlötung herstellbar.
- Der im obigen Gitter befindliche Hohlraum kann zur aktiven Kühlung von außen, durch den Schaft der Kraftstoffzuführung, genutzt werden.
- Die Anzahl, Größe und Anordnungsweise der Einspritzdüsen kann vielfältig variiert werden.
- Um die Struktur des äußeren Gehäuses mit der relativ großen Flanschverschraubung mechanisch einfacher zu gestalten, ist auch eine konstruktive Lösung denkbar, bei der der Kraftstoffanschluss mit dem Schaft von innen nach außen montierbar ausgestaltet ist (siehe auch Fig. 4).

Die Erfindung folgt somit einer Entwicklung, die:
- den zur Verfügung stehende Ringquerschnitt geradezu ideal ausnutzt,
- (nun) die lokalen Wirbelerzeuger den Kraftstoffvorhang funktionell auf den Umfang der Ringbrennkammer abwickelt,
- die Anzahl der Kraftstoffeinspritz- bzw. Einsprühstellen erhöht, um eine lokal besser kontrollierte und homogenere Verbrennung erzielen zu können,
- prinzipiell auch den gestuften Betrieb durch eine zwei- oder mehrgeteilte Kraftstoffzuführung ermöglicht.

Erfindungsgemäß ergeben sich somit, zusätzlich zu den bereits genannten Vorteilen, Vorteile hinsichtlich der Reduktion von NOₓ durch verkürzte Ausbrandzeiten und eine Magerverbrennung. Insgesamt ergibt sich ein höherer Ausbrennungsgrad mit geringeren Anteilen an CO und UHC. Der thermische Wirkungsgrad der erfindungsgemäßen Gasturbinenbrennkammer ist höher, als bei den aus dem Stand der Technik bekannten Konstruktionen, es ergibt sich ein geringerer Druckverlust. Weiterhin kann das Bauvolumen reduziert werden, wodurch sich die Gesamtgröße der Gasturbine verringern lässt. Hieraus folgt wiederum eine Reduzierung des Gesamtgewichts.

### Bezugszeichenliste

- 1: Äußere Brennkammerwandung
- 2: Innere Brennkammerwandung
- 3: Ringbrennkammer
- 4: Kraftstoffeinspritzdüsen
- 5: Brennkammerring
- 6: Luftleitprofil
- 7: Achse
- 8: Kraftstoffeinsprühschlitz
- 9: Verbindungsstücke
- 10: Rohr
- 11: Lufteintrittsringe
- 12: Brennkammerachse

## Patentansprüche

1. Gasturbinenbrennkammer mit einer durch eine äußere (1) und eine innere (2) Brennkammerwandung begrenzten Ringbrennkammer (3) sowie mit mehreren Kraftstoffeinspritzdüsen (4), **dadurch gekennzeichnet, dass** im stirnseitigen Bereich der Ringbrennkammer (3) über den gesamten Brennkammerring (5) Luftleitprofile (6) konzentrisch um die Brennkammerachse (12) angeordnet sind und dass die Kraftstoffeinspritzdüsen (4) im Wesentlichen gleichmäßig über den Brennkammerring (5) verteilt angeordnet sind.

2. Gasturbinenbrennkammer nach Anspruch 1, **dadurch gekennzeichnet, dass** die Luftleitprofile (6) in zumindest zwei konzentrischen Reihen angeordnet sind, wobei die resultierenden Luftströmungen jeweils in Umfangsrichtung zueinander gegenläufig ausgerichtet sind.

3. Gasturbinenbrennkammer nach Anspruch 1 oder 2, **dadurch gekennzeichnet, dass** die Austrittsrichtungen der Kraftstoffeinspritzdüsen (4) in einem Winkel zur lokalen Geschwindigkeitsrichtung der Luftströmung angeordnet sind.

4. Gasturbinenbrennkammer nach Anspruch 3, **dadurch gekennzeichnet, dass** die Austrittsrichtungen der Kraftstoffeinspritzdüsen (4) in einem Winkel zur Achse (7) der Gasturbine angeordnet sind.

5. Gasturbinenbrennkammer nach Anspruch 3, **dadurch gekennzeichnet, dass** die Austrittsrichtungen der Kraftstoffeinspritzdüsen (4) parallel zur Achse (7) der Gasturbine angeordnet sind.

6. Gasturbinenbrennkammer nach einem der Ansprüche 1 bis 5, **dadurch gekennzeichnet, dass** die Luftleitprofile (6) zueinander so angeordnet sind, dass sich lokale Turbulenzen ergeben, dass jedoch der den Brennkammerring (5) durchströmende Gesamtluftstrom keinen Restdrall aufweist.

7. Gasturbinenbrennkammer nach einem der Ansprüche 1 bis 6, **dadurch gekennzeichnet, dass** die Luftleitprofile (6) miteinander eine Gitterstruktur bilden.

8. Gasturbinenbrennkammer nach einem der Ansprüche 1 bis 7, **dadurch gekennzeichnet, dass** die Kraftstoffeinspritzdüsen (4) in die Luftleitprofile (6) integriert sind.

9. Gasturbinenbrennkammer nach einem der Ansprüche 2 bis 8, **dadurch gekennzeichnet, dass** der Kraftstoffeinsprühschlitz (8) wellenförmig geschwungen ausgebildet ist.

10. Gasturbinenbrennkammer nach einem der Ansprüche 2 bis 8, **dadurch gekennzeichnet, dass** die Luftleitprofile (6) eine lamellenartig geschwungene Abströmkante aufweisen.

11. Gasturbinenbrennkammer nach einem der Ansprüche 1 bis 8, **dadurch gekennzeichnet, dass** einzelne Kraftstoffeinspritzdüsen (4) je nach geforderter Leistung zugeschaltet werden können.
